# EUROPEAN PATENT APPLICATION

(11) **EP 2 374 677 A2**
(43) Date of publication of application: **12.10.2011**
(21) Application number: 11161346.9
(22) Date of filing: 06.04.2011
(51) Int. Cl.: B60W 20/00, B60W 40/06, B60W 10/18, B60K 6/46, B60K 6/485, B60W 30/18

(54) **Hybrid vehicle and method for a hybrid vehicle**

(30) Priority: 12.04.2010 SE 1050355
(71) Applicant: Scania CV AB, 151 87 Södertälje (SE)
(72) Inventor: Redbrandt, Karl, SE-171 63, SOLNA (SE); Selling, Tomas, SE-120 51, ÅRSTA (SE)

(57) **Abstract**

Hybrid vehicle comprising at least one electrical machine, one or more brake systems and a control system, which vehicle comprises an activation unit adapted to generating an activation signal which is arranged to activate the control system to calculate the retardation a*(t) required for bringing the vehicle to a halt solely by means of the brake torque which the electrical machine can provide. The retardation is calculated by means of a set of retardation parameters comprising at least one from among current vehicle speed, maximum and minimum limits for the retardation, and maximum brake torque for the electrical machine or machines, and the control system is further adapted to calculating a brake force F*ₜᵣ which is the brake force effecting the retardation a*(t), and to generating one or more brake signals based on F*ₜᵣ to the electrical machine or machines for braking of the vehicle to a halt.

## Description

### Field of the invention

The present invention relates to a hybrid vehicle and a method pertaining to a hybrid vehicle, according to the preambles of the independent claims.

### Background to the invention

The present invention relates to a vehicle with a hybrid system, i.e. a vehicle powered by a combination of a combustion engine and an electrical machine. The hybrid system may be of the series hybrid or parallel hybrid type or combinations of them.

One of the greatest challenges in the heavy vehicle industry is to reduce fuel consumption. Fuel costs represent about 30% of a heavy truck's lifecycle cost. Average distance travelled is about 150,000 km per annum and average fuel consumption is about 32.5 litres per 100 km. A small decrease in fuel consumption therefore results in large decreases in fuel costs. A good way of saving fuel is to regenerate brake energy and employ that energy for propulsion when needed, instead of merely converting the kinetic energy to heat by applying conventional brakes. This is possible by using a hybrid vehicle instead of a conventional vehicle.

A hybrid vehicle is a vehicle with at least two energy sources. For example, an internal combustion engine may be backed up by an electrical machine. The electrical machine may be used as both motor and generator. This makes it possible to treat the electrical machine as a means of reducing the vehicle's speed by using it as a generator, in which case the kinetic energy is used to induce a current which is then used to charge the battery, making it possible for the energy to be saved and employed later, instead of the kinetic energy being converted to heat by applying the conventional brake equipment. In driving situations which involve high fuel consumption, it can be greatly reduced by using the electric motor to back up the combustion engine. Such situations typically occur during acceleration and on uphill runs.

There are various kinds of electric hybrid systems, e.g. series hybrid, parallel hybrid and the combination of them known as power split system.

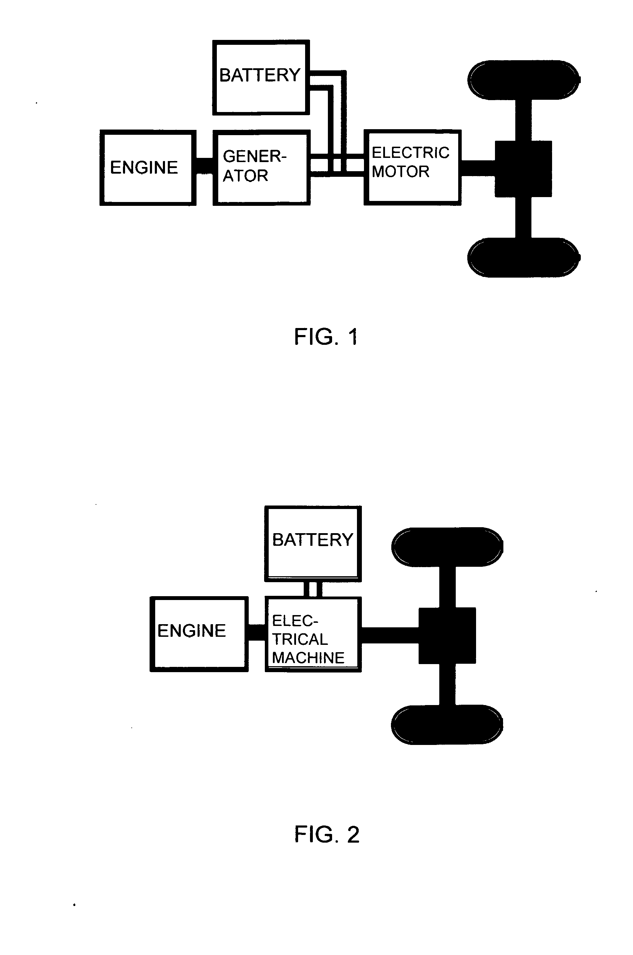

In a series hybrid system such as illustrated in Figure 1, the engine drives an electrical generator instead of directly driving the vehicle's wheels. The generator not only charges a battery but also provides energy for an electric motor which propels the vehicle. When large amounts of energy are needed, the engine takes it from both battery and generator. In parallel hybrid vehicles, the engine and an electrical machine which is used as both generator and motor are mechanically connected via engine shafts. An example of a parallel hybrid system is depicted in Figure 2. The connection may be situated between the engine and the electrical machine, making it possible to run the vehicle purely electrically. As the engine and the electrical machine rotate at exactly the same speed (when the connection is operative), they complement one another and run in parallel.

The current problem is that the driver risks retarding the vehicle in such a way as to waste energy. This arises, for example, when the service brake is applied on a level road. The kinetic energy will then convert to heat in the wheel brakes instead of electrical energy which might be somewhat better utilised. Normally, the driver does in principle not know how to conduct optimum braking and may consequently risk causing higher than necessary fuel consumption. To solve this problem there are various ways of making him/her aware of braking too hard. It is for example possible to provide some form of feedback, e.g. via displays, lamps etc., to draw the driver's attention to braking too hard, but such feedback is not always desirable in that it might disturb the driver and have adverse effects on his/her driving.

DE-102007035424A1 describes a solution based on the vehicle being put into as optimum a state as possible for responding to a driver's demand for braking/retardation. This solution will always retard the vehicle as desired by the driver and the system has no way of influencing its retardation.

The overall object of the present invention is to reduce the vehicle's energy consumption.

The object of the present invention is to propose a system to be employed for braking a vehicle, preferably a hybrid vehicle, in a more economic way than would be achieved by an average driver, which system is independent of the driver's driving style and makes it possible to recover as much brake energy as possible in order to reduce fuel consumption as far as possible. A more particular object is to recover as much energy as possible when braking the vehicle, by avoiding applying the friction brakes (wheel brakes, retarders etc.), since they cause energy to disappear in the form of heat.

### Summary of the invention

The above objects are achieved with the invention defined by the independent claims.

Preferred embodiments are defined by the dependent claims.

The solution according to the invention is based on the driver activating a function which brakes the vehicle as well as possible with respect to certain variables and parameters. The driver is enabled to learn what is good and to adapt the activation of the function to each given situation. As briefly discussed above, there are other solutions but they are all based on the driver opting for retardation and on the system adapting itself to what is demanded by him/her. The present solution is based on the opposite.

The solution according to the present invention is that the retardation is determined not by the driver but by the control system. The difference is that the driver's task is thus to learn to activate the function at the right time so that the vehicle comes to a halt where he/her wishes.

This solution needs no lamps or other forms of display to inform the driver as to whether he/she is acting correctly or not, since this is taken care of automatically.

It also becomes very easy to teach a driver to drive "correctly". All that is necessary is to teach him/her to activate the function at the right time instead of braking in the usual way. The function may for example be activated by the accelerator pedal being released in a certain way, or by pressing a button, etc. How the function is activated is not crucial.

The function functions in principle as follows:
The control system is allowed, on the basis of the situation, to opt for retardation within an applicable retardation range, e.g. 1.5 to 2.5 m/s². This range is bounded by a maximum retardation in terms of braking comfort and by a minimum retardation which ensures repeatability in terms of braking time and/or braking distance.

The desired retardation may not only depend on the efficiency of the hybrid system and the weight of the vehicle but also be based on information about distances to, and differences in altitude of, desired halting locations so that maximum brake energy is recovered.

The retardation a*(t) calculated by the control system corresponds to the brake force F*ₜᵣ, where F*ₜᵣ is the recommended brake force effecting the retardation a*(t).

The driver has always to be able to disregard the retardation opted for by the control system and brake harder if he/she so wishes, by pressing the brake pedal or in some other way deactivating the function. For example, ensuring that the vehicle comes to a halt at the right location may entail the driver having to correct its speed before applying the brake pedal to cause it to do so. In the case however of a driver who has learnt the behaviour of the function, application of the brake pedal will be minimised and a maximum amount of brake energy will be recovered on the basis of the customer's priorities of economy, comfort etc.

The invention results in a hybrid vehicle which lowers fuel consumption, enhances comfort, reduces brake wear and reduces retardation variability between drivers.

It is also conceivable that, for example, the haulage enterprise and/or the vehicle manufacturer may go on to determine what maximum retardations in normal situations should be, in order to ensure that drivers' environmental behaviour is not worse than a specific lowest level.

How the retardation is calculated depends on how much information about the system (and the future) is accessible.

The primary point about the function here concerned is therefore that the retardation is opted for not by the driver but by the control system. The system can thus be braked in such a way as to recover a higher proportion of energy.

The driver will gradually learn how the system works, and will thereby contribute to more environmentally appropriate driving.

### Brief description of the drawings

Figure 1 illustrates the power train in a series hybrid vehicle.
Figure 2 illustrates the power train in a parallel hybrid vehicle.
Figure 3 is a block diagram illustrating the present invention.
Figure 4 is a schematic diagram illustrating the present invention.
Figure 5 is a diagram of a characteristic curve for an electrical machine.

### Detailed description of preferred embodiments of the invention

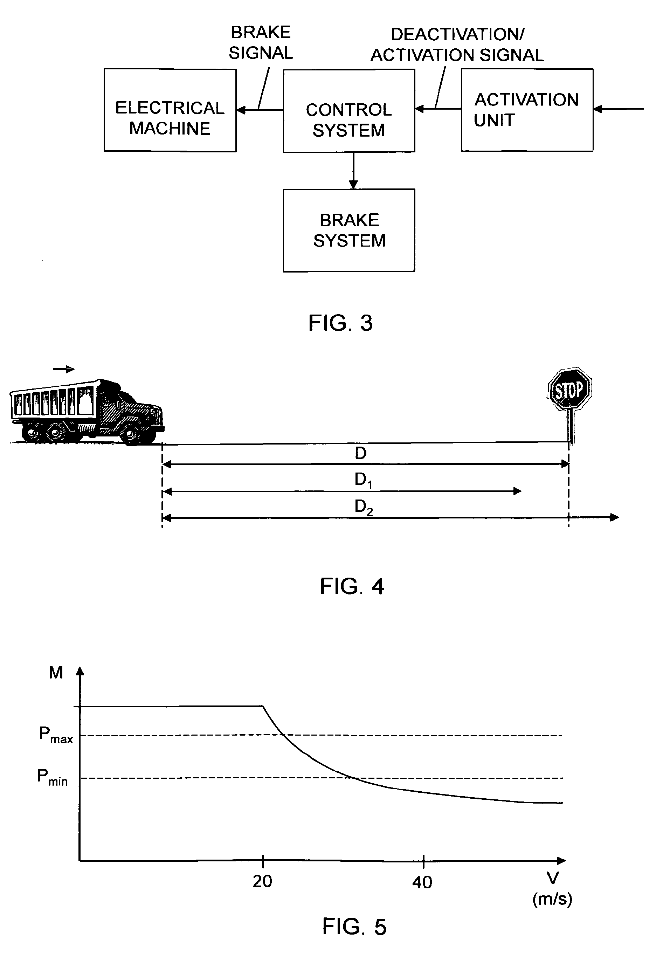

Figure 3 is a block diagram illustrating the present invention in the case of a hybrid vehicle comprising at least one electrical machine, one or more brake systems, e.g. wheel brakes, retarders etc., and a control system. The hybrid vehicle comprises an activation unit adapted to generating an activation signal which is arranged to activate the control system to calculate the retardation a*(t) required for bringing the hybrid vehicle to a halt solely by means of the brake torque which the electrical machine can provide.

The retardation is calculated by means of a set of retardation parameters comprising inter alia current speed, maximum and minimum limits for the retardation, and maximum brake torque for the electrical machine or machines.

The control system is arranged thereafter to calculate a brake force F*ₜᵣ which is the force effecting the retardation a*(t), and to generating one or more brake signals based on F*ₜᵣ to the electrical machine or machines to brake the vehicle to a halt.

The control system is generally adapted to calculating retardations for the vehicle so that maximum brake energy is recovered by the electrical machine.

The control system is preferably adapted to generating brake signals F*ₜᵣ to the electrical machine or machines such that the brake torque during braking is the maximum available brake torque at the time from the electrical machine or machines, subject to not exceeding the maximum limit for the retardation.

The calculation of the brake force F*ₜᵣ preferably involves using a regulating circuit with feedback which takes into account at least one from among current and desired vehicle speed and current and desired retardation. Current speed and/or retardation are fed back in the regulating circuit and the set-point value for the circuit is obtainable from a desired speed curve or retardation curve which optimises the retardation with respect to fuel consumption, driver/passenger comfort etc.

The brake force F*ₜᵣ is influenced inter alia by the vehicle's weight, air resistance and rolling resistance, which may be treated as vehicle-specific constants.

Using a regulating circuit with feedback obviates the need to take these vehicle-specific constants directly into account.

The air resistance is approximately proportional to the square of the vehicle speed multiplied by constants, e.g. representing the cross-sectional area of the vehicle's front. For the rolling resistance, the relationship is more proportional to vehicle speed alone.

Retardations are determined within an applicable retardation range bounded by a maximum retardation with respect to braking comfort and by a minimum retardation, such that the maximum limit for the retardation is related to driver/passenger comfort and is within the range 1.5 to 2.5 m/s².

According to an embodiment, the retardation parameters also comprise the gradient of the road, which is measurable by means of a simple gradient sensor and influences a*(t) in that more retardation is required downhill and less retardation uphill.

It is also possible to use information concerning the vehicle's current location from a GPS receiver in the vehicle which, in conjunction with map data which may comprise information about the topology of road sections ahead, can calculate the vehicle's distance from intersections or bus stops, which may be used to calculate the retardation.

According to a preferred embodiment, the activation unit is the vehicle's accelerator pedal and the activation signal is generated when the accelerator pedal is released. Alternatively, the activation unit may take the form of a simple control device, e.g. a button, which the driver presses to generate the activation signal. According to a further alternative, the system may be voice-controlled so that the driver can, e.g. by saying "Brake", cause the activation unit to generate an activation signal. A combination of these activation units is also possible, e.g. by the driver being able to use a control device to activate the function and by the activation signal being generated, provided that the function is active, when the driver releases the accelerator pedal.

The control system is preferably adapted to deactivating the retardation function if the activation unit delivers a deactivation signal to the control system and, according to an embodiment, in cases where the activation unit is the hybrid vehicle's accelerator pedal and the deactivation signal is generated when the accelerator pedal is depressed. According to another embodiment, the control system is adapted to deactivating the retardation function if the vehicle's brake pedal is depressed.

According to a further embodiment, deactivation signals may be generated if the accelerator pedal is depressed or if a brake pedal is depressed.

Ideally the vehicle will be braked so as to achieve the braking distance D illustrated schematically in Figure 4 by the truck coming to a halt at the stop sign.

If the driver releases the accelerator pedal too early, the system will brake the vehicle to a halt before the intended location, in which case the driver has to actively intervene and apply acceleration to cause it to reach the right location. This is illustrated in Figure 4 by the distance D1, which represents the vehicle coming to a halt before the intended location.

If the driver releases the accelerator pedal too late, the system will not be able to brake the vehicle, owing to the maximum permissible retardation set, and the driver will then have to actively intervene and apply the friction brakes to brake the vehicle. This does however take place from a low vehicle speed, which means that relatively little energy disappears in the form of heat. This is illustrated in Figure 4 by the distance D2 which represents the vehicle then coming to a halt after the intended location if the driver does not intervene actively.

The driver will gradually become more proficient at assessing when the activation signal needs to be delivered, e.g. when the accelerator pedal should be released, for the vehicle to come to a halt at the intended location.

The braking action from an electrical machine follows a characteristic curve, see Figure 5, which in simplified terms means that relatively less brake torque is applicable at higher vehicle speeds, whereas the brake torque increases at lower speeds to reach a maximum at speeds below a given speed, e.g. 20 km/h. This means that, when using the system according to the invention, less brake torque will be employed at the beginning of braking, when the vehicle speed is highest, and that the brake torque will thereafter increase to a maximum when the speed drops. This may initially be perceived by the driver as a form of braking which is different from what he/she normally applies whereby, on the contrary, he/she brakes more strongly at higher vehicle speed. The diagram shows maximum and minimum limits (Mₘₐₓ, Mₘᵢₙ) for the brake torque, and the maximum limit depends on what maximum retardation the driver or a passenger can tolerate with comfort. As discussed above, this limit will for example be within the range 1.5 to 2.5 m/s². The maximum and minimum limits are preferably variable and might be set on the occasion of vehicle testing or servicing or by the driver.

According to a preferred embodiment of the invention, brake signals F*ₜᵣ are generated to the electrical machine or machines, which means that brake torque extracted during braking is the maximum available brake torque from the electrical machine or machines at the time, subject to not exceeding the maximum limit for the retardation.

For example, in the case of a vehicle with a curve such as depicted in Figure 5 for the brake torque from the electrical machine, if the braking begins when the vehicle speed is 30 km/h, the brake torque which the electrical machine imparts may follow the torque curve all the way until it intersects Mₘₐₓ, i.e. a vehicle speed of only 20 km/h. Thereafter the brake torque will be Mₘₐₓ all the way until the vehicle is stationary.

The system is preferably set so that approximately the same stopping distance is achieved as when the driver brakes actively, i.e. by depressing the brake pedal.

The invention comprises also a method for a hybrid vehicle comprising at least one electrical machine, one or more brake systems and a control system.

The method comprises:
a) generating an activation signal,
b) activating the control unit, by the activation signal, to calculate the retardation a*(t) required to bring the hybrid vehicle to a halt solely by means of the brake torque which the electrical machine/machines can provide,
c) calculating the retardation a*(t) by means of a set of retardation parameters which comprise current vehicle speed, maximum and minimum limits for the retardation, and maximum brake torque for the electrical machine or machines,
d) calculating a brake force F*ₜᵣ which is the brake force effecting the retardation a*(t),
e) generating one or more brake signals based on F*ₜᵣ to the electrical machine or machines for braking of the vehicle.

The method preferably comprises the control system at step e) being adapted to generating brake signals F*ₜᵣ to the electrical machine or machines which result in brake torque extracted during the braking being the maximum available brake torque at the time from the electrical machine or machines, subject to not exceeding the maximum limit for the retardation.

According to a preferred embodiment, the calculation of the brake force F*ₜᵣ involves using a regulating circuit with feedback of current vehicle speed or retardation and with a set-point value which is desired vehicle speed or retardation.

The control system is generally adapted to calculating retardations for the vehicle so that maximum brake energy is recovered.

The retardation parameters also comprise the gradient of the road. Retardations are determined within an applicable retardation range bounded by a maximum retardation in terms of braking comfort and by a minimum retardation, such that the maximum limit for the retardation is related to driver/passenger comfort and is within the range 1.5 to 2.5 m/s².

Preferably, the activation unit is the hybrid vehicle's accelerator pedal and the activation signal is generated when the accelerator pedal is released.

The control system is adapted to deactivating the retardation function if the activation unit delivers a deactivation signal to the control system, the hybrid vehicle's accelerator pedal is preferred and the deactivation signal is generated when it is depressed. According to an alternative, the control system is adapted to deactivating the retardation function if the vehicle's brake pedal is depressed.

The present invention is not confined to the preferred embodiments described above. Various alternatives, modifications and equivalents may be used. The above embodiments are therefore not to be regarded as limiting the protective scope of the invention which is defined by the attached claims.

## Claims

1. A hybrid vehicle comprising at least one electrical machine, one or more brake systems and a control system,
**characterised in that** the vehicle comprises an activation unit capable of being activated by a driver and adapted to generating an activation signal which is arranged to activate the control system to calculate the retardation a*(t) required for braking the vehicle so that maximum brake energy is recovered, which retardation is calculated by means of a set of retardation parameters which comprise current vehicle speed, maximum and minimum limits for the retardation, and maximum power for the hybrid system, and that the control system is further adapted to calculating a brake force F*ₜᵣ which is the brake force effecting the retardation a*(t), and to generating one or more brake signals based on F*ₜᵣ to the electrical machine or machines for braking of the vehicle.

2. A hybrid vehicle according to claim 1, in which the calculation of the brake force F*ₜᵣ involves using a regulating circuit with feedback of current vehicle speed or retardation, and with a set-point value which is desired vehicle speed or retardation.

3. A hybrid vehicle according to claim 1 or 2, in which the retardation parameters also include the gradient of the road.

4. A hybrid vehicle according to any one of claims 1-3, in which the control system is adapted to calculating retardations for the vehicle so that maximum brake energy is recovered.

5. A hybrid vehicle according to any one of claims 1-4, in which retardations are determined within an applicable retardation range which is bounded by a maximum retardation in terms of braking comfort and by a minimum retardation.

6. A hybrid vehicle according to any one of claims 1-5, in which the maximum limit for the retardation is related to driver/passenger comfort and is within the range 1.5 to 2.5 m/s².

7. A hybrid vehicle according to any one of claims 1-6, in which the activation unit is the vehicle's accelerator pedal and the activation signal is generated when the accelerator pedal is released.

8. A hybrid vehicle according to any one of the foregoing claims, in which the control system is adapted to deactivating the retardation function if the activation unit delivers a deactivation signal to the control system.

9. A hybrid vehicle according to claim 8, in which the activation unit is the hybrid vehicle's accelerator pedal and the deactivation signal is generated when the accelerator pedal is depressed.

10. A hybrid vehicle according to claim 8 or 9, in which the control system is adapted to deactivating the retardation function if the vehicle's brake pedal is depressed.

11. A method for a hybrid vehicle comprising at least one electrical machine, one or more brake systems and a control system, **characterised in that** the method comprises:
a) receiving an activation signal generated by a driver,
b) activating the control system, by the activation signal, to calculate the retardation a*(t) required for braking the vehicle so that maximum brake energy is recovered,
c) calculating the retardation a*(t) by means of a set of retardation parameters which comprise current vehicle speed, maximum and minimum limits for the retardation and maximum power for the hybrid system,
d) calculating a brake force F*ₜᵣ which is the brake force effecting the retardation a*(t),
e) generating one or more brake signals based on F*ₜᵣ to the electrical machine or machines for braking the vehicle to a halt.

12. A method according to claim 11, in which the calculation of the brake force F*ₜᵣ involves using a regulating circuit with feedback of current vehicle speed or retardation, and with a set-point value which is desired vehicle speed or retardation.

13. A method according to claim 11 or 12, in which the retardation parameters also include the gradient of the road.

14. A method according to any one of claims 11-13, in which the control system is adapted to calculating retardations for the vehicle so that maximum brake energy is recovered.

15. A method according to any one of claims 11-14, in which retardations are determined within an applicable retardation range which is bounded by a maximum retardation in terms of braking comfort and by a minimum retardation.

16. A method according to any one of claims 11-15, in which the maximum limit for the retardation is related to driver/passenger comfort and is within the range 1.5 to 2.5 m/s².

17. A method according to any one of claims 11-16, in which activation unit is the hybrid vehicle's accelerator pedal and the activation signal is generated when the accelerator pedal is released.

18. A method according to any one of claims 11-17, in which the control system is adapted to deactivating the retardation function if the activation unit delivers a deactivation signal to the control system.

19. A method according to claim 18, in which the activation unit is the hybrid vehicle's accelerator pedal and the deactivation signal is generated when the accelerator pedal is depressed.

20. A method according to claim 18 or 19, in which the control system is adapted to deactivating the retardation function if the vehicle's brake pedal is depressed.
